# EUROPÄISCHE PATENTSCHRIFT

(11) **EP 1 074 026 B1**
(45) Veröffentlichungstag und Bekanntmachung des Hinweises auf die Patenterteilung: **25.01.2006**
(21) Anmeldenummer: 00910523.0
(22) Anmeldetag: 02.02.2000
(51) Int. Cl.: H01C 1/084

(54) **EIGENBELÜFTETER BREMSWIDERSTAND**
SELF-VENTILATED BRAKE RESISTOR
RESISTANCE DE FREINAGE AUTOVENTILEE

(30) Priorität: 15.02.1999 DE 29902641 U
(43) Veröffentlichungstag der Anmeldung: 07.02.2001
(73) Patentinhaber: GINO Gielen + Nothnagel GmbH, 53117 Bonn (DE)
(72) Erfinder: LIEBEL, Manfred, D-90559 Burgthann (DE)
(74) Vertreter: Selting, Günther
(86) Internationale Anmeldenummer: PCT/DE2000/000312
(87) Internationale Veröffentlichungsnummer: WO 2000/049627

(56) Entgegenhaltungen:
- EP-A- 0 676 774
- DE-A- 2 632 978

## Beschreibung

Die Erfindung betrifft einen eigenbelüfteten Bremswiderstand.

Bremswiderstände für Elektrofahrzeuge, insbesondere Schienenfahrzeuge und Elektrobusse sind aus der EP 0 676 774 B1 bekannt. Entsprechend des Einbauortes unterscheidet man Bremswiderstände in Dachmontage, in Innenraummontage oder Unterflurmontage. Unterflurbremswiderstände werden meist in fremdbelüfteter Ausführung gebaut. Dabei werden im wesentlichen zwei Belüftungsarten unterschieden:

Bei Bremswiderständen mit eigenem Lüfter ist sowohl dem Bremswiderstand als auch dem Umrichter ein eigener Lüfter zugeordnet. Diese Anordnung ist dann vor allem sinnvoll, wenn der Luftbedarf des Bremswiderstandes deutlich größer als der Luftbedarf des Umrichters ist. Durch diese Anordnung kann vor allem die durch den hohen Luftbedarf des Bremswiderstandes bedingte Verschmutzung von der Leistungselektronik ferngehalten werden. Bei annähernd gleichem Luftbedarf vom Umrichter und Bremswiderstand werden beide Komponenten lüftungstechnisch in Reihe geschaltet und gemeinsam mit gefilteter Luft gekühlt.

Durch die fortschreitende Entwicklung der Leistungselektronik konnte der Kühlbedarf für Umrichter weiter reduziert werden, so daß heute Umrichter für Schienenfahrzeuge eigenbelüftet ausgeführt werden. Für Elektrofahrzeuge sind aus Gründen der Betriebssicherheit und der Geräuschminimierung Forderungen nach Eigenbelüftung der Antriebskomponenten aufgestellt worden. Eigenbelüftete Bremswiderstände müssen mit mehr Aktivmaterial ausgestattet werden. Die damit verbundenen Mehrkosten und die Gewichtszunahme können durch den Wegfall des Lüfters weitestgehend kompensiert werden. Im Gegensatz zu eigenbelüfteten Dachwiderständen, bei denen die Abluft der Konvektionskühlung frei über dem Fahrzeug abströmen kann, ist bei eigenbelüfteten Unterflurwiderständen die Konvektion durch den darüberliegenden Fahrzeugboden erheblich behindert. Der bei eigenbelüfteten Unterflurwiderständen sich einstellende Wärmestau unter dem Fahrzeugboden gefährdet sowohl die mechanische Festigkeit des Fahrzeugs, als auch benachbarte Aggregate durch übermäßige Wärmeentwicklung.

Der Erfindung liegt demnach die Aufgabe zugrunde, bei einem eigenbelüfteten Bremswiderstand, insbesondere Unterflurwiderstand für ausreichende Kühlung zu sorgen und einen Wärmestau unter dem Fahrzeugboden zu vermeiden.

Die Lösung der gestellten Aufgabe erfolgt mit den Merkmalen des Anspruchs.

Durch diese erfindungsgemäße Ausführung wird der Strömungswiderstand der Bremswiderstandanordnung wesentlich verringert und es tritt eine starke Konvektion und damit eine bessere Kühlung der Bremswiderstände ein. Die reduzierte Kühllufterwärmung bei erhöhtem Volumenstrom der Kühlluft verringert den Materialbedarf der Bremswiderstände. Eine Gefährdung der mechanischen Festigkeit der Fahrzeugkonstruktion und der benachbarten Aggregate wird durch verstärktes Abströmen der erwärmten Kühlluft vermieden. Eine Gefährdung von Wagenkasten und Nachbaraggregaten ist durch die Abluft der Bremswiderstandsanordnung, die außerdem nur zur Fahrzeugaußenseite entweichen kann, nicht mehr gegeben. Die Erhöhung des Volumenstroms der Kühlluft führt zu einer deutlichen Senkung der Ablufttemperatur gegenüber herkömmlichen Bremswiderstandanordnungen, so daß bei Halt des Elektrofahrzeugs, insbesondere Schienenfahrzeuge auf Bahnhöfen eine Gefährdung der umstehenden Passanten auszuschließen ist.

In einer weiteren Ausgestaltung der Erfindung wird der Querschnitt des Gehäuses in Fahrzeugrichtung betrachtet im wesentlichen trapezförmig ausgebildet. Damit werden erhöhte Querschnitte der Kühlabluftöffnung erreicht.

Die Erfindung sowie weitere vorteilhafte Ausgestaltungen der Erfindung gemäß Merkmalen des Unteranspruchs werden im folgenden anhand eines schematisch dargestellten Ausführungsbeispiels in der Zeichnung näher erläutert. Darin zeigt:

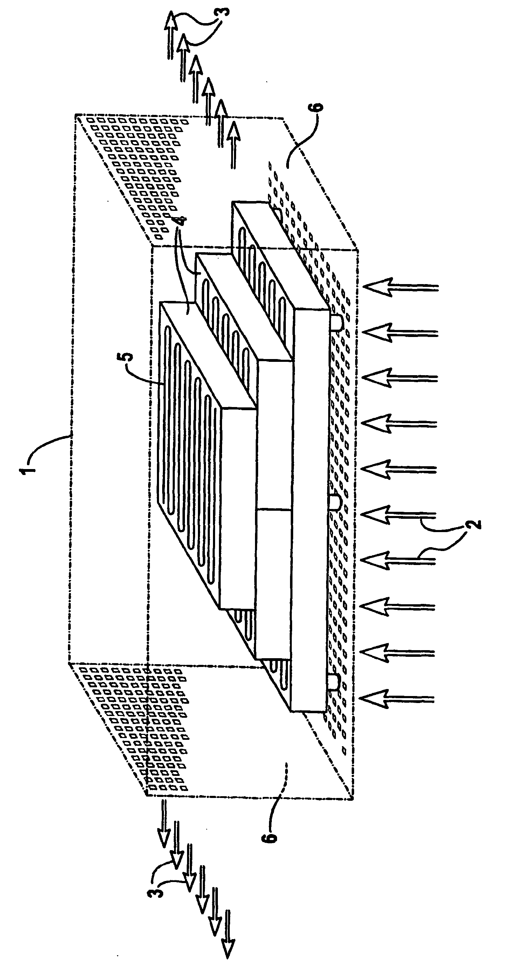

FIG 1 einen eigenbelüfteten Unterflurwiderstand in einem Gehäuse.

FIG 1 zeigt ein Gehäuse 1, in dem Bremswiderstände 4 angeordnet sind. Die Bremswiderstände 4 weisen vorzugsweise mäanderförmig angeordnete Bremswiderstandsbänder 5 auf. Die Bremswiderstände 4 sind trapezförmig im Gehäuse 1 angeordnet. Die Kühlluft 2 tritt vorzugsweise von unten in die trapezförmige Anordnung der Bremswiderstände 4 des Gehäuses 1 ein. Dort wird die Kühlluft 2 durch Vorbeistreichen an den Widerstandsbändern 5 erwärmt und an den Seiten des Gehäuses 6 als erwärmte Kühlluft 3 abgegeben. Diese Anordnung reduziert den Strömungswiderstand der Konvektionsluft, so daß ein erhöhter Kühlluftstrom 2, die Widerstandsanordnung 4 durchsetzen kann.

Das Gehäuse 1 ist vorzugsweise aus Lochblechen aufgebaut.

Nicht näher dargestellte benachbarte Aggregate oder der Fahrzeugboden können dadurch nicht übermäßig erwärmt werden.

## Patentansprüche

1. Bremswiderstände (4) für Elektrofahrzeuge, insbesondere Schienenfahrzeuge und Elektrobusse mit eigenbelüfteten Bremswiderständen (4) im Unterflurbereich, wobei die Bremswiderstände (4) schichtweise in einer im wesentlichen trapezförmigen Anordnung in zumindest einem Gehäuse (1) enthalten sind, das wenigstens eine Kühlmitteleintrittsöffnung und eine Kühlmittelaustrittsöffnung aufweist.

2. Gehäuse nach Anspruch 1, **dadurch gekennzeichnet, dass** der Querschnitt des Gehäuses (1) in Fahrtrichtung des Elektrofahrzeugs betrachtet, im wesentlichen trapezförmig ausgebildet ist.

## Revendications

1. Résistances de freinage (4) pour véhicule électrique, en particulier véhicule sur rails et électrobus comprenant des résistances de freinage autoventilées (4) dans la région du sous-sol, les résistances de freinage étant contenues en couches selon un agencement de forme sensiblement trapézoïdal dans au moins un boîtier (1) qui présente au moins une ouverture d'entrée pour moyens de refroidissement et une ouverture de sortie pour moyens de refroidissement.

2. Boîtier selon la revendication 1, **caractérisé par le fait que** la coupe transversale du boîtier (1) regardée dans la direction de circulation du véhicule électrique est formée selon une forme sensiblement trapézoïdale.

## Claims

1. Brake resistors (4) for electric vehicles, especially rail vehicles and electric buses with self-ventilated brake resistors in the underfloor area, the brake resistors (4) being included in layers and in a substantially trapezoidal arrangement in at least one housing (1) comprising at least one coolant inlet opening and one coolant outlet opening.

2. Housing of claim 1, **characterized in that** the cross section of the housing (1) is substantially trapezoidal in shape when viewed in the traveling direction of the electric vehicle.
